# EUROPEAN PATENT SPECIFICATION

(11) **EP 3 682 123 B1**
(45) Date of publication and mention of the grant of the patent: **26.04.2023**
(21) Application number: 18875009.5
(22) Date of filing: 05.09.2018
(51) Int. Cl.: F16B 5/06, B60R 13/02, F16B 21/07

(54) **A CONNECTOR**
VERBINDER
CONNECTEUR

(30) Priority: 12.09.2017 TR 201713375
(43) Date of publication of application: 22.07.2020
(73) Proprietor: Ford Otomotiv Sanayi A.S., 34885 Sancaktepe/Istanbul (TR)
(72) Inventor: YILMAZ, Nurettin, 34885 Istanbul (TR); DINC, Serkan, 34885 Sancaktepe/Istanbul (TR); TANER, Kaan, 34885 Sancaktepe/Istanbul (TR); ERBIL, A. Egemen, 34885 Sancaktepe/Istanbul (TR)
(74) Representative: Dericioglu, E. Korhan
(86) International application number: PCT/TR2018/050467
(87) International publication number: WO 2019/098975

(56) References cited:
- WO-A1-2009/148721
- DE-C1- 19 857 372
- US-A1- 2014 062 117

## Description

### Field of the Invention

The present invention relates to a connector which enables to eliminate water leakage risks by means of providing an alternative connection without drilling a hole on the sheet metal in cosmetic applications of plastic materials that are required to be mounted on the face to face connection line of the sheet metal.

### Background of the Invention

In the roofs of the vehicles, the flow of water is intense and a conventional clip is used in the plastic applications in the roof area. In this type of applications, there is a risk of water leakage into the vehicle through the clip areas due to the surface tolerances of the sheet metal and plastic parts. In other words, in the state of the art, the clip applications used on the vehicles are realized as a hole and a clip that is inserted into this hole. These applications involve a risk of water and air leakage.

The United States patent document no. US2014062117, an application in the state of the art, relates to a fastener comprising soft and hard components. In the present invention, the fasteners which are arranged in certain intervals have flange-like protrusions.

The United States patent document no. US2012068488, an application in the state of the art, relates to a retaining clip for ditch molding. In the said invention, the molding can be mounted on the sheet metal plates without requiring a hole drilled thereon.

The French patent document no. FR2675547, an application in the state of the art, relates to a fastener for fixing a molded element into a groove. In the said invention, the molding can be mounted on the sheet metal plates without requiring a hole drilled thereon.

The international patent application numbered WO2009148721 discloses a fastening system incorporating structures adapted to urge a retained molding strip generally towards a preselected side of the roof ditch depression to maintain proper orientation of the molding strip. The fastening system may incorporate a one-piece or a multi-piece retainer adapted for riveted or other connection at a base of a roof ditch depression. The connection between the fastening system and the roof is enabled via a rivet.

### Problems Solved by the Invention

The objective of the present invention is to provide a connector, which enables to eliminate water leakage risks by means of providing an alternative connection without drilling a hole on the sheet metal in cosmetic applications of plastic materials that are required to be mounted on the face to face connection line of the sheet metal.

Another objective of the present invention is to provide a connector which enables the technician to connect the plastic part onto the sheet metal piece easily and rapidly.

### Detailed Description of the Invention

A connector developed to fulfill the objectives of the present invention is illustrated in the accompanying figures, in which:

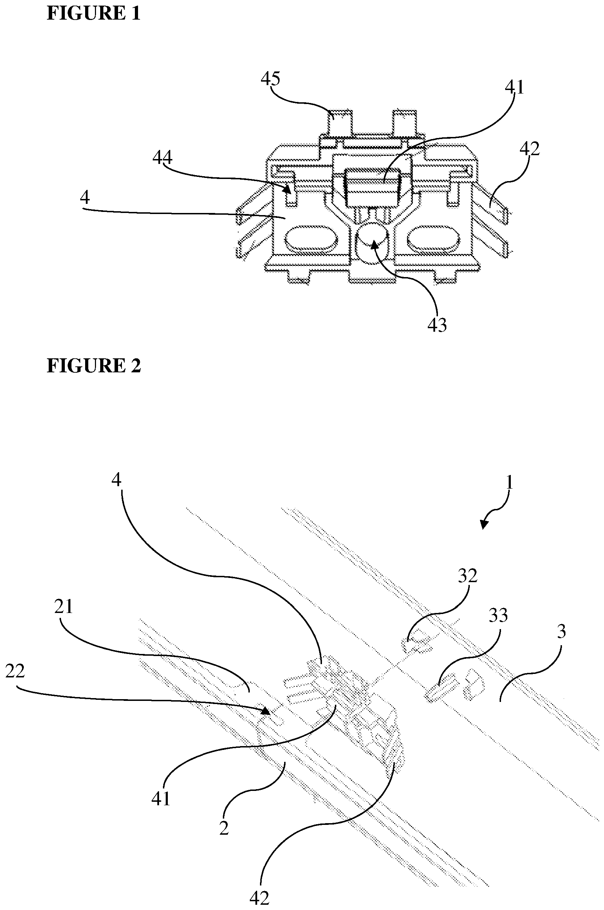

- **Figure 1.**: is a perspective view of the body.
- **Figure 2.**: is a perspective view of the connector.

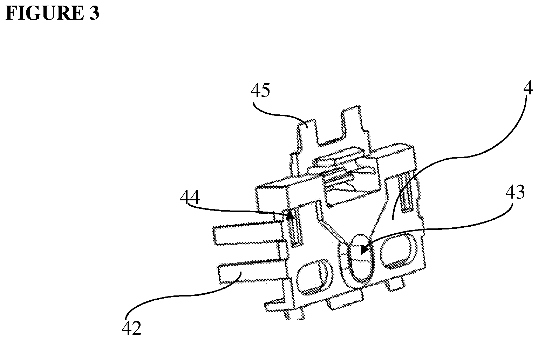

- **Figure 3.**: is a perspective view of the body.

The components shown in the figures are given reference numbers as follows:
**1.** Connector
**2.** Sheet metal surface
   21. 6. Flange
   22. Flange groove
**3.** Plastic surface
   31. Alignment protrusion
   32. Plastic lug
**4.** Body
   41. Body lug
   42. Support piece
   43. Alignment hole
   44. Engagement hole
   45. Sheet metal lug

The connector (1) which is used in vehicle connections and which provides impermeability essentially comprises:
- at least one sheet metal surface (2),
- at least one flange (21) lying on the sheet metal surface (2),
- at least one flange groove (22) which is drilled on the flange (21),
- at least one plastic surface (3) which is designed to be positioned on the sheet metal surface (2),
- at least one alignment protrusion (31) which is placed on the plastic surface (3),
- at least one plastic lug (32) which is placed on the plastic surface (3),
- at least one body (4) positioned between the sheet metal surface (2) and the plastic surface (3),
- at least one body lug (41) which is placed on the body (4) and is fitted into the flange groove (22),
- at least one support piece (42) which is placed on the body (4) and contacts the sheet metal surface (2),
- at least one alignment hole (43) which is drilled on the body (4) and through which the alignment protrusion (31) passes,
- at least one engagement hole (44) which is drilled on the body (4) and into which the plastic lug (32) fits.

In the connector (1) of the present invention, preferably there is a sheet metal surface (2) preferably used in the vehicle roof region. A flange (21) lies on the said sheet metal surface (2), preferably on the edge thereof, and a flange groove (22) is drilled on the flange (21). A plastic surface (3) is provided which is designed to be positioned on the sheet metal surface (2) and which is aligned so as to be parallel to the edge of the sheet metal (2). There is a plastic surface (3) designed to be positioned on the sheet metal surface (2). The plastic surface (3) is used to cover a point where a plurality of sheet metal surfaces (2) is connected. An alignment protrusion (31) is placed on the plastic surface (3). The alignment protrusion (31) is in the form of an upright rod extending from the plastic surface (3). A plastic lug (32) is placed on the plastic surface (3). A body (4) is positioned between the sheet metal surface (2) and the plastic surface (3) in order to cover the point where the sheet metal surfaces (2) are connected. There is provided a body lug (41) which is placed on the body (4) and is positioned so as to fit into the flange groove (22). Furthermore, a support piece (42) is placed on the body (4).

The support piece (42) extends from the body (4) in the form of an upright rod contacting the sheet metal surface (2) and exerts a reverse force to allow the body lug (41) to hold tightly. An alignment hole (43) is drilled on the body (4) and the alignment protrusion (31) passes through the alignment hole (43) thereby fixing the plastic surface (3). An engagement hole (44) is drilled on the body (4) and the plastic lug (32) passes through this engagement hole (44). This way, the body (4) and the plastic surface (3) are enabled to be fastened to each other. Thus, a connector (1), which enables to eliminate water leakage risks by means of providing an alternative connection without drilling a hole on the sheet metal in cosmetic applications of a plastic surface (3) that is required to be mounted on the face to face connection line of the sheet metal, is provided.

A connector (1) enables arrangement of a plastic surface (3) that covers the point where sheet metal surfaces (2) are placed on top of one another. For this purpose, the body lug (41) provided on the body (4) is fastened to the flange groove (22), and the support piece (42) on the body (4) exerts a reverse force to the surface that it holds so as to enable the body (4) to remain fixed on the sheet metal surface.

According to the invention, the support piece (42) is a flexible piece. In a preferred embodiment of the invention, the support piece (42) is comprised of a spring. In a preferred embodiment of the invention, a support piece (42) is disposed on both opposite sides of the body (4) to ensure balance. A plastic surface (3) is attached onto the body (4) which is placed on the sheet metal surface (2). There is provided an alignment hole (43) on the body (4) to fasten the plastic surface (3), and the user positions the alignment protrusion (31) on the plastic surface (3) and the alignment hole (43) concentrically in order to place the plastic surface (3) properly. The alignment protrusion (31) is passed through the concentric alignment hole (43). After the alignment protrusion (31) is passed through the alignment hole (43), the plastic lug (32) on the plastic surface (3) is fitted into the engagement hole (44). Thus, a connector, which enables the technician to connect the plastic surface (3) onto the sheet metal surface (2) easily and rapidly, is provided.

In a preferred embodiment of the invention, at least one sheet metal lug (45) is provided which is placed on the body (4) to enable the connector (1) to hold onto the sheet metal surface (2) tightly. The sheet metal lug (45) is provided on the edges of the body (4) to enable the connector (1) to hold onto the sheet metal surfaces (2), which are in different positions; and it has a smaller form compared to the body lug (41). However, it faces the same surface with the body lug (41).

## Claims

1. A connector (1) which is used in vehicle connections and which provides impermeability, essentially **comprising:**
- at least one sheet metal surface (2),
- at least one plastic surface (3) which is designed to be positioned on the sheet metal surface (2), and **characterized by**
- at least one flange (21) lying on the sheet metal surface (2),
- at least one flange groove (22) which is drilled on the flange (21),
- at least one alignment protrusion (31) which is placed on the plastic surface (3),
- at least one plastic lug (32) which is placed on the plastic surface (3),
- at least one body (4) positioned between the sheet metal surface (2) and the plastic surface (3),
- at least one body lug (41) which is placed on the body (4) and is fitted into the flange groove (22),
- at least one support piece (42) which exerts a reverse force to allow the body lug (41) to hold tightly, which is a flexible piece, enable the body (4) to remain fixed on the sheet metal surface (2), which extends from the body (4) and which contacts the sheet metal surface (2),
- at least one alignment hole (43) which is drilled on the body (4) and through which the alignment protrusion (31) passes,
- at least one engagement hole (44) which is drilled on the body (4) and into which the plastic lug (32) fits.

2. A connector (1) according to Claim 1, **comprising** the support piece (42) which is disposed on both opposite sides of the body (4) to ensure balance.

3. A connector according to Claim 1, **comprising** at least one sheet metal lug (45) which is placed on the body (4) to enable to hold onto the sheet metal surface (2) tightly.

## Patentansprüche

1. Ein Anschlussstück (1), das in Fahrzeuganschlüssen verwendet wird und der Dichtigkeit dient, im Wesentlichen **umfassend:**
- mindestens eine Blechoberfläche (2),
- mindestens eine Kunststoffoberfläche (3), die dazu ausgebildet ist, auf der Blechoberfläche (2) positioniert zu werden, und **gekennzeichnet durch**
- mindestens einen auf der Blechoberfläche (2) angeordneten Flansch (21),
- mindestens eine Flanschnut (22), die in den Flansch (21) eingebracht ist,
- mindestens einen Ausrichtungsvorsprung (31), der auf der Kunststoffoberfläche (3) angeordnet ist,
- mindestens eine Kunststofflasche (32), die auf der Kunststoffoberfläche (3) angebracht ist,
- mindestens ein Gehäuse (4), das zwischen der Blechoberfläche (2) und der Kunststoffoberfläche (3) angeordnet ist,
- mindestens ein Gehäuselasche (41), die auf dem Gehäuse (4) angeordnet und in die Flanschnut (22) eingepasst ist,
- mindestens ein Stützteil (42), das eine Gegenkraft ausübt, um das Festhalten der Gehäuselasche (41) zu ermöglichen, wobei es sich um ein elastisches Teil handelt, das es dem Gehäuse (4) ermöglicht, auf der Blechoberfläche (2) fixiert zu bleiben, sich von dem Gehäuse (4) aus erstreckt und an der Blechoberfläche (2) anliegt,
- mindestens ein Ausrichtungsloch (43), das in das Gehäuse (4) gebohrt ist und durch das der Ausrichtungsvorsprung (31) verläuft,
- mindestens ein Eingriffsloch (44), das in das Gehäuse (4) gebohrt ist und in das die Kunststofflasche (32) passt.

2. Anschlusstück (1) nach Anspruch 1, **umfassend** das Stützteil (42), das auf beiden gegenüberliegenden Seiten des Gehäuses (4) angeordnet ist, um das Gleichgewicht zu gewährleisten.

3. Anschlussstück nach Anspruch 1, **umfassend** mindestens eine Blechlasche (45), die auf dem Gehäuse (4) angeordnet ist, um einen festen Halt auf der Blechoberfläche (2) zu ermöglichen.

## Revendications

1. Un connecteur (1) qui est utilisé dans les connexions de véhicules et qui assure l'imperméabilité, **comprenant** essentiellement :
- au moins une surface en tôle (2),
- au moins une surface en plastique (3) qui est conçue pour être positionnée sur la surface en tôle (2), et **caractérisée par**
- au moins une bride (21) reposant sur la surface en tôle (2),
- au moins une rainure de bride (22) qui est percée sur la bride (21),
- au moins une saillie d'alignement (31) qui est placée sur la surface en plastique (3),
- au moins une patte en plastique (32) qui est placée sur la surface en plastique (3),
- au moins un corps (4) positionné entre la surface en tôle (2) et la surface en plastique (3),
- au moins une patte de corps (41) qui est placée sur le corps (4) et est insérée dans la rainure de la bride (22),
- au moins une pièce de support (42) qui exerce une force inverse pour rendre possible le maintien ferme de la patte de corps (41), qui est une pièce flexible, permettre au corps (4) de rester fixé sur la surface de tôle (2), qui s'étend à partir du corps (4) et qui est en contact avec la surface en tôle (2),
- au moins un trou d'alignement (43) qui est percé sur le corps (4) et à travers lequel passe la saillie d'alignement (31),
- au moins un trou d'engagement (44) qui est percé sur le corps (4) et dans lequel s'insère la patte en plastique (32).

2. Un connecteur (1) selon la Revendication 1, **comprenant** la pièce de support (42) qui est disposée sur les deux côtés opposés du corps (4) pour assurer l'équilibre.

3. Un connecteur selon la Revendication 1, **comprenant** au moins une patte en tôle (45) qui est placée sur le corps (4) pour permettre de maintenir fermement la surface en tôle (2).
